# EUROPÄISCHE PATENTSCHRIFT

(11) **EP 3 356 711 B1**
(45) Veröffentlichungstag und Bekanntmachung des Hinweises auf die Patenterteilung: **26.08.2020**
(21) Anmeldenummer: 16775618.8
(22) Anmeldetag: 26.09.2016
(51) Int. Cl.: F16K 37/00, F16K 31/06, H01F 7/08, H01F 7/16

(54) **ELEKTROMAGNETISCHER STELLANTRIEB ZUR AUSFÜHRUNG EINER LINEAREN BEWEGUNG**
ELECTROMAGNETIC ACTUATING DRIVE FOR CARRYING OUT A LINEAR MOVEMENT
DISPOSITIF D'ENTRAÎNEMENT ÉLECTROMAGNÉTIQUE POUR EFFECTUER UN DÉPLACEMENT LINÉAIRE

(30) Priorität: 29.09.2015 DE 102015116464
(43) Veröffentlichungstag der Anmeldung: 08.08.2018
(73) Patentinhaber: Voith Patent GmbH, 89522 Heidenheim (DE)
(72) Erfinder: GOLL, Armin, 74673 Mulfingen (DE); LEHMANN, Stefan, 91578 Leutershausen (DE); LINDÖRFER, Steffen, 74575 Schrozberg (DE)
(74) Vertreter: Rupprecht, Kay
(86) Internationale Anmeldenummer: PCT/EP2016/072824
(87) Internationale Veröffentlichungsnummer: WO 2017/055208

(56) Entgegenhaltungen:
- DE-A1- 3 638 295
- DE-A1-102011 056 853
- DE-A1-102012 108 583
- US-A- 4 270 726
- US-B1- 6 918 571

## Beschreibung

Die Erfindung betrifft einen elektromechanischen Wandler, insbesondere einen elektromagnetischen Stellantrieb zum Ausführen einer linearen Bewegung.

Elektromagnetische Antriebe werden unter anderem zum Antrieb von hydraulischen Schieberventilen, insbesondere für das Öffnen und Schließen von Ventilen, eingesetzt. In diesem Zusammenhang unterscheidet man zwischen Niederdrucksystemen im Bereich von 3-25 bar, Mitteldrucksystemen im Bereich von 25-65 bar und Hochdrucksystemen im Bereich von 65-200 bar. Aus dem Stand der Technik sind Hydraulikventile bekannt, die als Niederdrucksystem im Bereich von ca. 10 bar arbeiten. Stellantriebe für Ventile in den Niederdrucksystemen sind im Vergleich zu Stellantrieben in den Hochdrucksystemen größer und schwerer.

Aufgrund von Kostenaspekten sowie von technischen Aspekten steigt der Bedarf an neuen Antrieben für Hochdrucksysteme mit kleineren Ventilen. Hochdrucksysteme haben gegenüber Niederdrucksystemen den Vorteil, dass die verwendeten Fluide weniger Druck-, Verwirbelungs- und Beschleunigungsverluste aufweisen. Des Weiteren ist bei Hochdrucksystemen die Verwendung von kleineren Bauteilen möglich, mit denen ebenfalls eine Kostenoptimierung erreicht und Platz gespart werden kann. Allerdings müssen Stellantriebe in Hochdrucksystemen größere Kräfte im Vergleich zu ihrer Dimensionierung aufbringen können.

Aus dem Stand der Technik sind bereits Stellantriebe für Hochdruckanwendungen bekannt, die z.B. Spulen mit einem Permanentmagneten verwenden und eine bidirektionale Bewegung ausführen können, d.h. der Permanentmagnet wird mittels einer Elektrospule entweder in die eine oder in die entgegengesetzte Richtung ausgelenkt. Allerdings sind derartige Antriebe relativ groß dimensioniert. Kleinere Antriebe aus dem Stand der Technik sind wiederum nicht fähig, die für Hochdrucksysteme notwendige Kraft für die Hubachse bereitzustellen, um gegen eventuellen auftretenden Schmutz im Druckmedium ausreichend Kraftreserven zu haben.

US 4 270 726 A beschreibt eine Ventilanordnung, insbesondere zum Steuern des Flusses von heißem Wasser durch eine Heizvorrichtung eines Kraftfahrzeugs. Die Ventilanordnung umfasst im Wesentlichen ein geschlossenes Gehäuse, das mit einer Einlasskammer und einer Auslasskammer, die miteinander durch eine einen Ventilsitz bildende Öffnung in Verbindung stehen, und einem Ventilelement vorgesehen ist relativ zum Ventilsitz bewegbar zum Öffnen und Schließen der Öffnung. Die Anordnung umfasst ferner eine flexible Membran, die an ihrem Außenumfang mit dem Gehäuse verspannt ist und die auf der dem Ventilsitz abgewandten Seite der Einlasskammer eine Steuerkammer bildet. Das Ventilglied wird durch einen Elektromagneten betätigt, der auch auf ein Hilfsventilglied in der Steuerkammer einwirkt, um während der Bewegung des Ventilglieds zu dem Ventilsitz hin einen höheren Druck in der Steuerkammer als in der Auslaßkammer und während der Bewegung des Ventils zu erzeugen vom Ventilsitz weg einen geringeren Druck in der Steuerkammer als in der Einlasskammer.

DE 36 38 295 A1 bezieht sich auf ein Elektromagnetisches Betätigungsorgan, insbesondere zur Verwendung in einem Kraftstofffördersystem. Das Betätigungsorgan enthält einen Hohlkörper, welcher eine längliche Kammer umschliesst, ein Kernteil, welches sich in diese Kammer erstreckt und innerhalb der Kammer eine kegelstumpfförmige Oberfläche aufweist, einen innerhalb der Kammer gleitbaren Anker, dessen dem Kernteil zugewandte Endoberfläche eine Gestalt hat, die zu der der Endoberfläche des Kernteils komplementär ist. Das Kernteil und der Körper bilden Bestandteile des Magnetkreises, welcher auch den Anker und den Luftspalt zwischen dem Anker und dem Kernteil und den Luftspalt zwischen dem Anker und dem Körper einschliesst, und dessen von dem Kernteil abgewandten seitlichen Oberflächen von sich verjüngender Gestalt sind, sowie eine Wicklung, die bei Erregung einen Magnetfluss in diesem Magnetkreis induziert, und federnde Elemente, die der Bewegung des Ankers in Richtung auf dieses Kernteil unter der Wirkung des Magnetflusses entgegenwirken.

US 6 918 571 B1 zeigt ein soleniodenbetätigtes Ventil, das eine Betätigungsstange aufweist, die an dem Anker befestigt ist, wobei ein Ende der Stange das Ende eines Ventilelements berührt, um dessen Bewegung bei Erregung der Spule zu bewirken. Ein unteres Lager ist in einem unteren Flusskollektor neben einem Ende der Stange angeordnet. Eine obere Lagerfläche ist an einem Einstellelement angeordnet, das mit einem oberen Flusskollektor verschraubt ist, wobei sich die Ankerrückholfeder zwischen dem Anker und dem oberen Lager befindet, um die Lagertrennung zu maximieren und die Ankerausrichtung zu verbessern und die Hysterese zu reduzieren.

Ein Elektromagnet eines Stellantriebs weist bekannter Weise eine Spule, die mit Strom ein Magnetfeld erzeugt, sowie einen Kern und einen Anker auf. Der Draht einer Spule ist regelmäßig kreisförmig aufgewickelt. Der Kern eines Elektromagneten besteht aus einem weichmagnetischen Werkstoff, im einfachsten Fall aus Weicheisen. Der Kern dient der Unterstützung und/oder Verstärkung des Magnetfeldes. Der Anker des Elektromagneten ist ferromagnetisch und wird durch das Magnetfeld, das durch die Spule erzeugt und durch den Kern verstärkt wird, angezogen. Das zwischen Anker und Kern ausgebildete Magnetfeld übt eine Kraft aus, die abhängig von dem zwischen Anker und Kern gebildeten Luftspalt bzw. Abstand ist und im Wesentlichen einer hyperbolisch Kennlinie entspricht; d.h. je kleiner der Abstand zwischen Kern und Anker wird, desto stärker wird die Magnetkraft. Diese Kraft wächst mit geringer werdender Distanz zwischen Kern und Anker im Wesentlichen asymptotisch an.

Angesichts dessen liegt der Erfindung die Aufgabe zu Grunde, einen elektromagnetischen Antrieb zum Ausführen einer lineare Bewegung, insbesondere einer Hubbewegung, der eingangs genannten Art zur Verfügung zu stellen, der eine einfache, kompakte, kosteneffiziente und flexible Anwendung bei Hochdrucksystemen und gleichzeitig eine exakte Positionierung des Kolbens an einer beliebigen Position mit optimierter Ausfahrgeschwindigkeit ermöglicht.

Diese Aufgabe wird durch einen elektromagnetischen Antrieb gemäß Patentanspruch 1 gelöst. Weitere vorteilhafte Ausführungsbeispiele des erfindungsgemäßen Gegenstands sind in den abhängigen Patentansprüchen angegeben.

Der erfindungsgemäße elektromagnetische Antrieb zum Ausführen einer linearen Bewegung weist einen Elektromagneten mit einer Spule, einem Kern und einem entlang einer Symmetrieachse des Kerns linear bewegbaren Anker auf, wobei zwischen dem Kern und dem Anker ein Luftspalt ausgebildet ist. Ferner weist der Luftspalt eine Basis und zwei symmetrisch zur Symmetrieachse verlaufende Schenkel sowie einen im Längsschnitt im Wesentlichen kegelstumpfförmigen Querschnitt auf, und die Schenkel sind zur Symmetrieachse des Kerns unter Einschluss eines Winkels α angeordnet.

Der Vorteil der vorliegenden Erfindung liegt darin, dass der Luftspalt in seiner Fläche vergrößert und dadurch eine stärkere Kraft zwischen Anker und Kern ausgebildet wird. Des Weiteren bedingt die im Wesentlichen rotationssymmetrisch ausgebildete Fläche eine Reduzierung der durch die Form bedingten Querkräfte. Obwohl es auf Grund von Fertigungstoleranzen zu Unregelmäßigkeiten bei der Fläche des Kerns und/oder des Ankers und somit zu einer unvollständigen Neutralisierung der Querkräfte kommen kann, sind diese Querkräfte im Vergleich zu einer asymmetrischen Fläche weitaus geringer. Der Winkel α der Schenkel gegenüber der Symmetrieachse liegt im Bereich zwischen 30-70°, vorzugsweise zwischen 35-65°, insbesondere 45°-60°. Das beste Resultat hinsichtlich starker Magnetkraft ist bei 60° erreichbar.

Vorzugsweise weist der elektromagnetische Antrieb einen zwischen Spule und Kern angeordneten, hohlzylinderförmigen und magnetisierbaren bzw. ferromagnetischen Steg auf, der ein Teil eines Gehäuses bildet, in dem der Elektromagnet angeordnet ist. Zum einen dient der Steg als Positionierungsmittel für die Spule sowie für den Kern und den Anker. Da der Steg magnetisierbar ist, dient der Steg zum anderen als Bypass für das innerhalb der Spule ausgebildete Magnetfeld. Ebenso ist die einstückige Ausführung des Stegs als Teil des Gehäuses bei der Produktion von Vorteil, da dadurch der Steg nicht in zusätzlicher und komplizierter Fertigungsarbeit an das Gehäuse angelötet oder angeschweißt werden muss.

Der Kern erstreckt sich vorteilhafterweise über den Steg bis über den äußeren Rand des Gehäuses und schließt dieses an einer oberseitigen Öffnung des Gehäuses als Deckel ab. Dadurch wird in vorteilhafter Weise eine kompakte Bauweise des elektromagnetischen Antriebs ermöglicht. Zusätzlich dient der sich nach außen erstreckende Kern als Führungsmittel für das magnetische Feld. Dadurch kann das Magnetfeld gezielt ausgebildet und für die Anwendung angepasst werden.

Vorteilhafterweise ist der Kern derart geformt, einen Messluftspalt zu einer Außenseite des Stegs auszubilden. Aufgrund des magnetisierbaren Stegs wird ein Teil des Magnetfelds durch den Messluftspalt geleitet, dessen magnetische Flussdichte der des Luftspalts zwischen Kern und Anker im Wesentlichen proportional bzw. von seiner Größendimension ähnlich ist. Dadurch wird ein Referenzpunkt erschaffen, der nicht innerhalb der Spule, insbesondere zwischen Kern und Anker liegt.

In einer weiteren vorteilhaften Ausführungsform weist der elektromagnetische Antrieb einen in dem Messluftspalt angeordneten Magnetfeldsensor, insbesondere einen Hall-Sensor, zur Messung der magnetischen Flussdichte auf. Dies hat den Vorteil, dass der Magnetfeldsensor aufgrund seiner geschickten Anordnung in dem Messluftspalt eine proportionale magnetische Flussdichte zu der aus dem Luftspalt zwischen Kern und Anker messen kann. Durch die Messung des Magnetfelds bzw. dessen Flussdichte können Rückschlüsse auf die auf den Anker wirkenden Kräfte gezogen und diese berechnet und geregelt werden.

Vorteilhafterweise weist der elektromagnetische Antrieb ein Bodenverschlusselement auf, das an einer Unterseite des Gehäuses befestigt ist bzw. diesen an der Unterseite verschließt. Dadurch wird ein Raum zwischen dem Bodenverschlusselement und dem Kern definiert, in dem der Anker linear bewegbar ist. Des Weiteren kann dieses Element bei entsprechender Ausbildung entweder, wie der Kern, als Führungsmittel oder, wie das Deckelzentrierelement, als Entkopplungsmittel des Magnetfelds dienen.

In einer weiteren vorteilhaften Ausführungsform ist der Raum mit einem Dämpfungsfluid wie z.B. Öl gefüllt. Dadurch wird die Beschleunigung des Ankers aufgrund der magnetischen Anziehungskraft und/oder eines Rückstellelements wie z.B. einer Feder gedämpft, vermindert bzw. gebremst.

Vorteilhafterweise weist der Kern einen entlang der Symmetrieachse verlaufenden Durchbruch auf, in dem eine Ankerachse lagerbar und/oder gelagert ist. Dadurch besteht die Möglichkeit, eine Verbindung zwischen dem Anker und der Außenseite des elektromagnetischen Antriebs herzustellen. Durch die symmetrische Anordnung des Durchbruchs wird eine Belastung des übrigen Materials des Kerns gleichmäßig verteilt.

Vorteilhafterweise ist auf der Oberseite des Kerns ein Zentrierdeckelelement angeordnet, um die Ankerachse zusätzlich zu lagern und eine rein lineare Bewegung der Ankerachse zu gewährleisten.

In einer weiteren vorteilhaften Ausführungsform ist an einem Ende im Anker eine Ankerachse befestigt, wobei sich die Ankerachse über eine Oberseite des Kerns erstreckt und am anderen Ende ein kugelförmiges Lagerelement aufweist. Durch die Befestigung der Ankerachse wird in einfacher Weise sichergestellt, dass diese nicht aus dem elektromagnetischen Antrieb herausgezogen werden kann. Andernfalls könnten etwaige Dämpfungsfluide über den Durchbruch des Kerns aus dem elektromagnetischen Antrieb auslaufen. Das kugelförmige Lagerelement dient als stabiles Kopfelement für ein Aufnahmeelement, z.B. ein Pfannenelement, und kann dadurch eine gleichmäßige Kraft entlang der Symmetrieachse z.B. auf ein Ventil bewirken.

Des Weiteren weist der Anker ein Hubeinstellungsmittel zum Einstellen eines Hubbereichs der Ankerachse auf. Der Vorteil dieser Weiterbildung der Erfindung liegt darin, dass die Ankerachse bei unterschiedlichen Anwendungen nicht ausgetauscht werden muss, sondern mit dem Hubeinstellungsmittel eingestellt werden kann.

Vorzugsweise ist in dem Durchbruch des Kerns ein Achsengleitlager angeordnet, um die durch die konische Form des Ankers bzw. des Kerns auftretenden Querkräfte bzw. der auftretenden magnetischen Querkräfte zu kompensieren und ein Kippen oder Abwinkeln des Ankers bei der Bewegung zu verhindern.

Als vorteilhaft hat sich ebenfalls herausgestellt, wenn der Anker parallel zur Symmetrieachse verlaufende Durchbrüche aufweist, die jeweils mit einem Verschlussmittel, insbesondere einer Madenschraube verschließbar sind. Insbesondere wenn ein Dämpfungsfluid im Innenraum des Ankers vorhanden ist, kann die Dämpfung durch offene und verschlossene Durchbrüche reguliert werden. Je mehr Durchbrüche offen sind, desto schneller kann ein Dämpfungsfluid zwischen dem Raum auf der Unterseite des Ankers zum Raum auf der Oberseite des Ankers und umgekehrt fließen. Die Dämpfung des Ankers ist am Stärksten, wenn alle Durchbrüche verschlossen sind.

Vorzugsweise ist an der Basis des Luftspalts ein Abstandselement angeordnet, insbesondere eine Abstandsscheibe, welches einen minimalen Abstand zwischen Kern und Anker bestimmt. Da die magnetische Kraft mit einer Verkleinerung des Luftspalts hyperbolisch ansteigt, wird durch ein natürliches Hindernis wie dem Abstandselement die maximale Kraft auf den Anker beschränkt.

In einer weiteren vorteilhaften Ausführungsform sind Gleitlager, insbesondere Sinterlager, in einer Ankernut angeordnet, wobei die Ankernut an einer Außenseite und an einem zum Kern benachbarten Rand des Ankers ausgebildet ist. Diese Gleitlager helfen, die auftretenden Querkräfte aufgrund der konischen Form des Kerns bzw. des Ankers zu kompensieren und eine lineare Bewegung des Ankers zu gewährleisten.

Der erfindungsgemäße elektromagnetische Antrieb weist in anderen Ausführungsbeispielen vorzugsweise folgende Merkmale und Dimensionierungen auf:

Der Steg ist derart dünn und/oder leicht magnetisierbar, dass eine Sättigung des Stegs bei einem vorliegenden Magnetfeld sehr schnell erreicht wird. Dadurch werden Verluste bei der Kraftbildung im Luftspalt, die durch die Bypasswirkung des Stegs unvermeidbar sind, begrenzt.

Um eventuelle Querkräfte und deren Effekte soweit wie möglich zu kompensieren, hat die Hubachse bzw. Ankerachse einen Durchmesser von vorzugsweise mindestens 5 mm bzw. 6 mm. Dadurch wird ein Durchbiegen der Hubachse und somit ein eventuelles Verkippen des Ankers bei einer linearen Hubewegung verhindert.

Der erfindungsgemäße Antrieb arbeitet unidirektional, d.h. der Anker ist kein Dauermagnet und die Magnetkraft kann den Anker lediglich in eine Richtung bewegen. Eine Feder ist vorzugsweise derart konfiguriert bzw. extern angeordnet, den Anker bei schwachem oder nicht-anliegendem Magnetfeld in eine Ausgangsposition zu bewegen.

Der Luftspalt zwischen Anker und Kern beträgt im Mittel 2,5 mm. Da der Gesamthub der Ankerachse 4 mm beträgt, ist der Luftspalt 0,5 bis 4,5 mm breit.

Der Anker ist an seiner Außenseite mit einem DU-Gleitlager ausgestattet, um die magnetischen Querkräfte besser zu kompensieren und ein Anliegen des Ankers am Steg zu verhindern.

Das Zentrierdeckelelement auf dem Kern ist eine Scheibe aus einem nichtmagnetisierbaren Metall, z.B. eine Aluminiumscheibe, und dient als magnetische Entkoppelung. Da das Magnetfeld nicht durch die Scheibe nach Außen geleitet wird, konzentriert sich das Magnetfeld im Kern und beeinflusst keine externen Elemente. Zusätzlich ist das Magnetfeld nicht durch externe Elemente beeinflussbar.

Ähnlich wie das Zentrierdeckelelement wirkt ein Gehäuseanbauelement des Gehäuses als Elektronik-Dom und bietet Schutz für die Elektronik und die interne Magnetfeldmessstelle vor externen Beeinflussungen wie z.B. durch magnetische Metalle oder Magnetfelder.

Eine alternative Ausführungsform des Antriebs weist statt einer Kegelstumpf-Form des Kerns und eine gegengleich ausgebildete Form des Ankers eine andere rotationssymmetrische Form auf, z.B. statt gerader Schenkel liegen gekrümmte, parabelförmige Schenkel vor. Zusätzlich oder alternativ kann anstelle der Basis auch eine rotationssymmetrische konische Vertiefung oder eine rotationssymmetrische Vertiefung mit gekrümmten Wänden vorliegen.

Die Erfindung wird im Folgenden anhand von Ausführungsbeispielen unter Bezug auf die beigefügten schematischen Zeichnungen näher erläutert. Weitere Ausführungsformen des erfindungsgemäßen Gegenstands sollen im Sinne der vorliegenden Erfindung hierdurch nicht ausgeschlossen sein.

Es zeigen:
- Fig. 1: einen Querschnitt eines elektromagnetischen Antriebs gemäß einer ersten Ausführungsform;
- Fig. 2: eine Außenansicht eines elektromagnetischen Antriebs gemäß einer zweiten Ausführungsform;
- Fig. 3: einen Querschnitt des elektromagnetischen Antriebs aus Fig. 2 entlang einer angezeigten Achse A-A; und
- Fig. 4: eine Explosionsansicht des elektromagnetischen Antriebs aus Fig. 2.

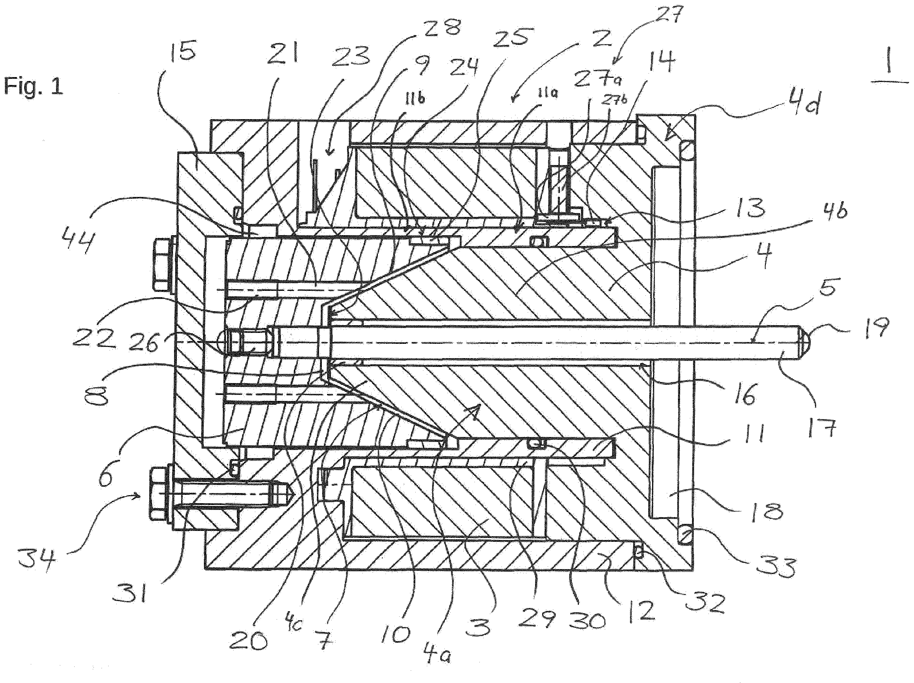

Fig. 1 zeigt einen erfindungsgemäßen elektromagnetischen Antrieb 1 im Querschnitt mit einem Elektromagneten 2 mit einer Spule 3, einem Kern 4 sowie einem Anker 6. Zwischen Kern 4 und Anker 6 ist ein Luftspalt 7 ausgebildet, der durch eine Oberfläche des kegelstumpfförmigen bzw. konischen Kerns 4 und eine gegengleich geformten Oberfläche des Ankers 6 begrenzt ist.

Das Gehäuse 12 des elektromagnetischen Antriebs 1 ist quaderförmig ausgebildet, wobei das Gehäuse 12 im Innenraum einen hohlzylinderförmigen Steg 11 aufweist. Der Steg 11 und das Gehäuse 12 sind aus einem Stück gebildet, insbesondere gedreht. Des Weiteren ist der Steg 11 sowohl zur Oberseite als auch zur Unterseite des Gehäuses 12 offen und bildet dadurch einen Durchbruch zwischen beiden gegenüberliegenden Seiten.

Der Kern 4 weist einen zu einer Symmetrieachse 5 rotationssymmetrischen Körper 4a mit einem Zylinder 4b und einem konisch geformten Kegelstumpf 4c auf, der in den zylinderförmigen Innenraum des Stegs 11 eingesetzt ist. Damit der Kern 4 an einer bestimmten Position innerhalb des Gehäuses 12, insbesondere des Stegs 11, montiert bzw. befestigt ist, erstreckt sich vom rotationssymmetrischen Körper 4a des Kerns 4 ein die Oberseite des Gehäuses verschließendes Deckelelement 4d. Das Deckelelement 4d liegt auf der Oberseite des Gehäuserands auf und ist mittels Befestigungsmitteln (nicht sichtbar) mit dem Gehäuse 12 fest verbunden. Durch den Körper 4a und das Deckelelement 4d ist der Kern 4 innerhalb des Stegs 11 an einer vorbestimmten Position befestigt und nicht beweglich. Der obere Rand des Stegs 11 ist passgenau in das Deckelelement 4d eingesetzt. Zusätzlich ist das Deckelelement 4d derart ausgebildet, dass ein kreis- bzw. ringförmiger Messluftspalt 13 um den Steg 11, insbesondere zwischen dem Deckelelement 4d und der Außenseite des Stegs 11, entsteht. Des Weiteren ist das Deckelelement 4d derart ausgebildet, dass es die Spule 3 an einem Hin- und Hergleiten auf dem Steg 11 hindert und an einer vorbestimmten Position hält. Der Kern 4, insbesondere der Körper 4a, weist einen Durchbruch 16 entlang der Symmetrieachse 5 auf, in dem eine Ankerachse 17 gelagert ist. Der Kegelstumpf 4c hat in der Querschnittsansicht eine geradlinige Basis 8 und einen ersten und einen zweiten geradlinigen Schenkel 9, 10. Die Fläche der Basis 8 ist auf Grund des Durchbruchs 16 ringscheibenförmig.

Der Steg 11 weist im Bereich des Zylinders 4b des Kerns eine dicke Stegwand 11a und ab Beginn des Kegelstumpfs 4c in Richtung Unterseite des Gehäuses 12 eine dünnere Stegwand 11b mit kleinerer Wanddicke auf. Dadurch entsteht ein Vorsprung, der als zusätzliche, natürliche Grenze des Verfahrensbereichs des Ankers 6 dient. Des Weiteren ist durch die dünnere Wand 11b der Verlust an magnetischer Flussdichte durch den als Bypass agierenden Steg 11 geringer.

Die Drähte der Spule 3 sind auf einer Fassungsvorrichtung 29 aufgewickelt und über einen Stromanschluss 28 mit einer externen Stromquelle verbindbar. Die Spule 3 ist auf den Steg 11 gesetzt, sodass die Innenseite der Spule 3, insbesondere der Fassungsvorrichtung 29, auf der Außenseite des Stegs 11 aufliegt. Der Steg 11 bildet dadurch eine Lagerung für die Spule 3 innerhalb des Gehäuses. Auf Grund der ferromagnetischen Eigenschaften des Stegs 11 dient der Steg 11 ebenfalls als Bypass für das im Inneren der Spule ausbildbare Magnetfeld. Bypass bedeutet in diesem Zusammenhang, dass Teile des Magnetfelds nicht im Luftspalt zwischen Kern und Anker mitwirken, sondern über den Bypass, in diesem Fall den Steg 11, umgeleitet werden.

An der Unterseite des Gehäuses 12 ist ein scheibenförmiges Bodenverschlusselement 15 mittels Befestigungsmitteln 34, insbesondere Schrauben, befestigt. Mittig in dem Bodenverschlusselement 15 ist eine kreisförmige Vertiefung ausgebildet, die den gleichen Durchmesser wie der Innendurchmesser des Stegs 11 hat. Des Weiteren ist die Vertiefung des Bodenverschlusselements 15 konzentrisch zum Steg 11 angeordnet, so dass der Anker 6 aus dem Inneren des Stegs 11 in die Vertiefung bewegbar ist.

Der Anker 6 ist zylinderförmig ausgebildet und weist auf der Oberseite eine konische Vertiefung auf, die gegengleich zur Unterseite des Kerns 4 ausgebildet ist. Durch den Anker 6 verlaufen parallel zur Symmetrieachse 5 eine Vielzahl von Durchbrüchen 21, die mittels Verschlussmittel 22, insbesondere Madenschrauben verschlossen oder verschließbar sind. Durch die Durchbrüche 21 kann ein Dämpfungsfluid fließen, das die Beschleunigung des Ankers 6 abbremsen kann. An der Außenseite des Ankers 6 erstreckt sich von dem oberen, zum Kern 4 gerichteten Rand und um den kompletten Umfang des Ankers 6 eine Ankernut 24, in der ein Gleitlager 25, insbesondere ein Sinterlager angeordnet ist. Dieses Gleitlager 25 hilft, die durch den Luftspalt 7 auftretenden magnetischen Querkräfte zu kompensieren und den Anker 6 an einem Kippen zu hindern. In dem Anker 6 ist ein Durchbruch ausgebildet, der entlang der Symmetrieachse 5 verläuft, und in dem eine Ankerachse 17 mit einem Lagerelement 19, insbesondere einem Lagerkopfelement befestigt ist. Mittels eines in dem Durchbruch des Ankers angeordneten Hubeinstellmittels 26, insbesondere einer Stellschraube, kann der Verfahrweg bzw. -bereich der Ankerachse voreingestellt werden. Die Ankerachse 17 ist mit einem in dem Durchbruch 16 des Kerns 4 angeordneten Achsengleitlager 20 bei der Basis 8 gelagert. Zusätzlich ist an der Basis 8 um die Ankerachse 17 ein Abstandselement 23, insbesondere eine Abstandsscheibe, angeordnet, um einen kleinsten möglichen Luftspalt 7 und somit die maximale mögliche magnetische Kraft auf den Anker 6 festzulegen. Um die Querkräfte zusätzlich zu kompensieren, wird die Ankerachse 17 zusätzlich mit einem Zentrierdeckelelement 18 gelagert, das auf der Oberseite in einer Vertiefung des Deckelelements 4d angeordnet ist. Des Weiteren ist am Ende des Stegs 11, insbesondere am zur Unterseite der Gehäuse gerichteten Ende der dünnen Stegwand 11b zwischen Gehäuse 12 und Anker 6 ein Gleitlager 44 angeordnet.

Der zwischen Kern 4, Bodenverschlusselement 15 und Steg 11 definierte Raum ist mit dem Dämpfungsfluid gefüllt. Zur Dichtung des elektromagnetischen Antriebs 1 sind ringförmige Dichtungsmittel ausgebildet, insbesondere ein Stegdichtungsring 30 zwischen Kern 4 und Steg 11, ein Bodendichtungsring 31 zwischen Bodenverschlusselement 15 und Gehäuse 12, ein Kerndichtungsring 32 zwischen Deckelelement 4d und Gehäuse 12 und ein Deckeldichtungsring 33 zwischen Deckelelement 4d und einem extern anzubauenden Teil wie z.B. einem Hydraulikventilgehäuse (u.a. oder z.B. ein Zentrierdeckelelement 18).

In dem Messluftspalt 13 ist ein Magnetfeldsensor 14, insbesondere ein Hallsensor angeordnet, der die Magnetfeldflussdichte bzw. Magnetfeldstärke in diesem Luftspalt 13 misst. Durch die Anordnung von Messluftspalt 13 und Magnetfeldsensor 14 ist die gemessene Magnetfeldflussdichte proportional zu der im Luftspalt 7 herrschenden Magnetfeldflussdichte. Um magnetische Einflüsse auf das Signal des Sensors 14 zu verringern bzw. verhindern, ist direkt an dem Sensor 14 an der Außenseite des Stegs 11 eine Sensorhaltevorrichtung 27 mit einer Sensorelektronik 27a und einer Sensorsteckvorrichtung 27b angeordnet. Die Sensorelektronik 27a wertet das Signal des Sensors 14 aus und/oder versendet das (ausgewertete) Signal.

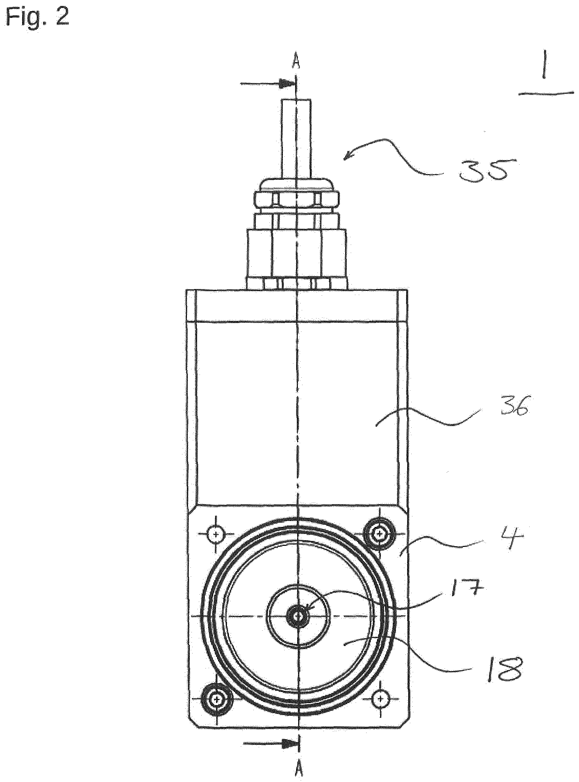

Figur 2 zeigt einen erfindungsgemäßen elektromagnetischen Antrieb 1 in der Draufsicht gemäß einer zweiten Ausführungsform. Die Elemente der zweiten Ausführungsform sind im Wesentlichen identisch zu den Elementen der ersten Ausführungsform aus Fig. 1. Die strukturellen und funktionellen Unterschiede bestehen darin, dass zusätzlich an dem Gehäuse 12 (nicht direkt sichtbar) ein Gehäuseanbauelement 36 mit einem Eingang/Ausgang-Verkabelungsanschluss 35 (E/A-Verkabelungsanschluss) ausgebildet ist. Des Weiteren ist die Ankerachse 17 und das Zentrierdeckelelement 18 in Figur 2 erkennbar.

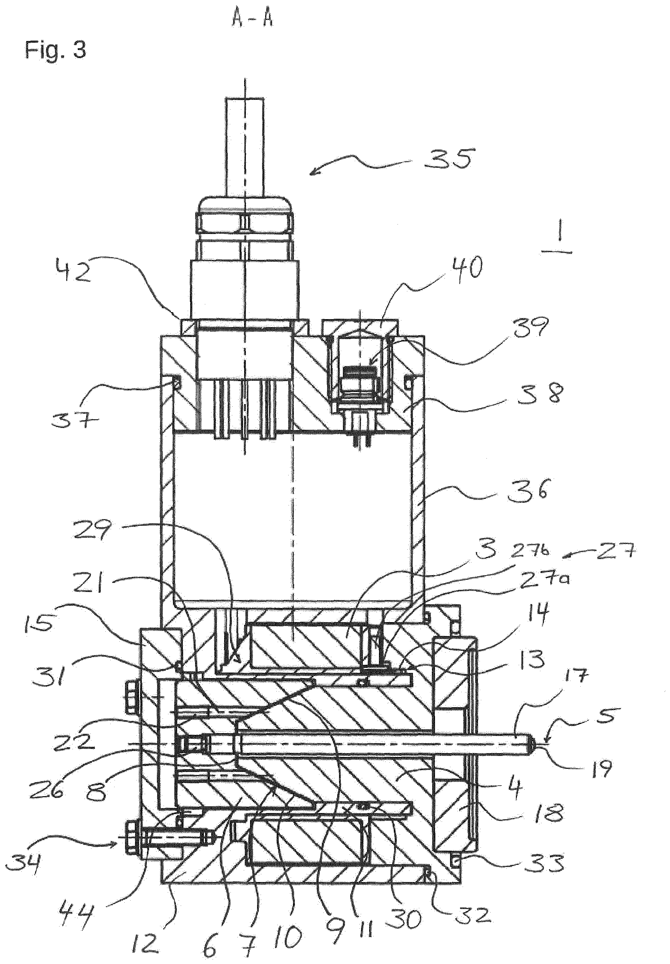

Figur 3 zeigt einen Querschnitt des elektromagnetischen Antriebs aus Fig. 2 entlang einer Achse A-A. Das Gehäuseanbauelement 36 ist einstückig mit dem Gehäuse 4 ausgebildet und kann eine zusätzliche Steuerungs- und/oder Auswertungselektronik für die Spule 3 und den Magnetfeldsensor 14 enthalten. Das Gehäuseanbauelement 36 ist mit einem Gehäuseanbaudeckelelement 38 verschlossen und mit einem zwischen den beiden Elementen 36 und 38 angeordneten Anbaudichtungsring 37 abgedichtet. Zusätzlich sind in dem Gehäuseanbaudeckelelement 38 der E/A-Verkabelungsanschluss 35 mit einem Verkleidungsring 42 und ein Stecker 39 für Parametrierung und/oder Busankopplung mit einer Steckerverkleidung 40 angeordnet. In dieser Ausführungsform weist der Anker 6 keine Ankernut 24 wie in Fig. 1 auf.

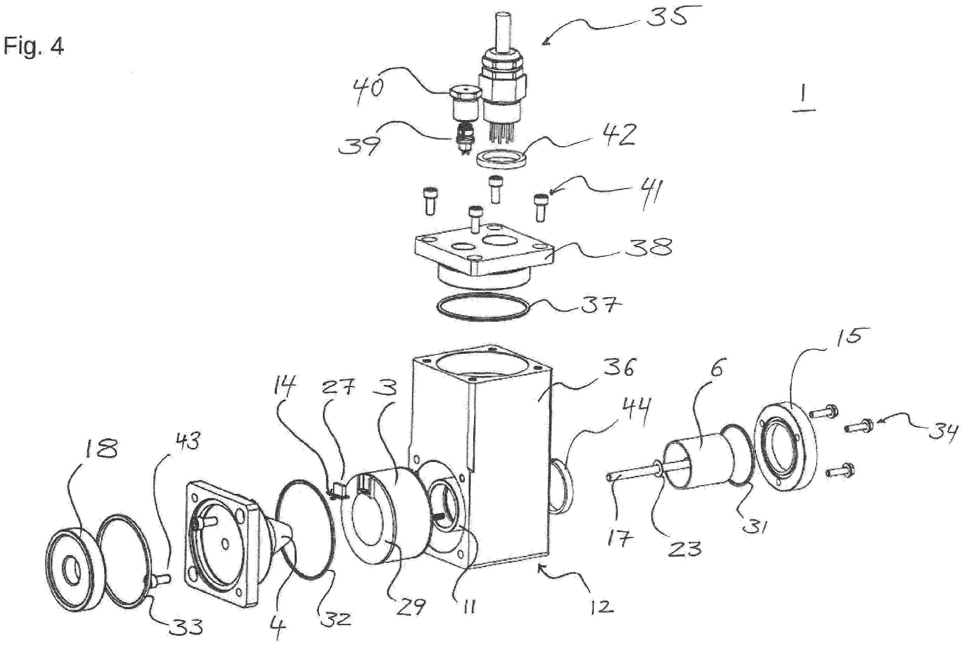

Figur 4 zeigt eine Explosionsansicht des elektromagnetischen Antriebs aus Fig. 2. Die gezeigten Elemente des elektromagnetischen Antriebs sind identisch zu den in Fig. 2 und 3 gezeigten Elementen. Gut erkennbar ist die Quaderform des Gehäuses 12 mit dem Gehäuseanbauelement 36. Die Fassungsvorrichtung 29 der Spule weist eine Vertiefung an der Oberseite auf, in welche die Sensorhaltevorrichtung 27 des Hallsensors 14 einsetzbar ist.

### Bezugszeichen

- 1: Elektromagnetischer Antrieb
- 2: Elektromagnet
- 3: Spule
- 4: Kern
- 4a: rotationssymmetrischer Körper (des Kerns)
- 4b: Zylinder (des Kerns)
- 4c: konisch geformter Kegelstumpf (des Kerns)
- 4d: Deckelelement (des Kerns)
- 5: Symmetrieachse
- 6: Anker
- 7: Luftspalt
- 8: Basis
- 9: Schenkel
- 10: Schenkel
- 11: Hohlzylinderförmiger Steg
- 11a: Dicke Stegwand
- 11b: Dünne Stegwand
- 12: Gehäuse
- 13: Messluftspalt
- 14: Magnetfeldsensor
- 15: Bodenverschlusselement
- 16: Durchbruch des Kerns
- 17: Ankerachse
- 18: Zentrierdeckelelement
- 19: Lagerelement (Lagerkopfelement)
- 20: Achsengleitlager
- 21: Durchbruch des Ankers (Dämpfungseinrichtung)
- 22: Verschlussmittel (Madenschrauben)
- 23: Abstandselement (Abstandsscheibe)
- 24: Ankernut
- 25: Gleitlager (Sinterlager)
- 26: Hubeinstellmittel (Einstellschraube)
- 27: Sensorhaltevorrichtung
- 27a: Sensorhalter
- 27b: Steckvorrichtung
- 28: Stromanschluß der Spule
- 29: Fassungsvorrichtung der Spule
- 30: Stegdichtungsmittel (Stegdichtungsring)
- 31: Dichtungsmittel des Bodenabschlusselements (Bodendichtungsring)
- 32: Kerndichtungsmittel (Kerndichtungsring)
- 33: Deckeldichtungsmittel (Deckeldichtungsring)
- 34: Befestigungsmittel des Bodenabschlusselements (Schraube)
- 35: E/A-Verkabelungsanschluss (Strom- und/oder Datenanschluß)
- 36: Gehäuseanbauelement (Teil des Gehäuses)
- 37: Gehäuseanbaudichtungsmittel (Anbaudichtungsring)
- 38: Gehäuseanbaudeckel
- 39: Stecker
- 40: Steckerverkleidung
- 41: Befestigungsmittel des Gehäuseanbaudeckels (Schraube)
- 42: Verkleidungsring des E/A-Verkabelungsanschlußes
- 43: Befestigungsmittel des Kerns (Schraube)
- 44: Gleitlager

## Patentansprüche

1. Elektromagnetischer Antrieb (1) zum Ausführen einer linearen Bewegung, mit einem Elektromagneten (2) mit einer Spule (3), einem Kern (4) und einem entlang einer Symmetrieachse (5) des Kerns (4) linear bewegbaren Anker (6), wobei zwischen dem Kern (4) und dem Anker (6) ein Luftspalt (7) ausgebildet ist, wobei der Luftspalt (7) eine Basis (8) und zwei symmetrisch zur Symmetrieachse (5) verlaufende Schenkel (9, 10) sowie einen im Längsschnitt im Wesentlichen kegelstumpfförmigen Querschnitt aufweist, und die Schenkel (9, 10) zur Symmetrieachse (5) des Kerns (4) unter Einschluss eines Winkels (α) angeordnet sind, **dadurch gekennzeichnet, dass** der elektromagnetische Antrieb einen zwischen Spule (3) und Kern (4) angeordneten, hohlzylinderförmigen und magnetisierbaren Steg (11) aufweist, der einen Teil eines Gehäuses (12) bildet, in dem der Elektromagnet (2) angeordnet ist,
wobei der Kern (4) einen Messluftspalt (13) zu einer Außenseite des Stegs (11) und der elektromagnetische Antrieb einen in dem Messluftspalt (13) angeordneten Magnetfeldsensor (14), insbesondere einen Hallsensor, zur Messung der magnetischen Flussdichte aufweist.

2. Elektromagnetischer Antrieb (1) nach Anspruch 1,
**dadurch gekennzeichnet, dass**
sich der Kern (4) über den Steg (11) bis an den äußeren Rand des Gehäuses (12) erstreckt und eine Oberseite des Gehäuses (12) als Deckel abschließt.

3. Elektromagnetischer Antrieb (1) nach Anspruch 1 oder 2,
**gekennzeichnet durch**
ein an einer Unterseite des Gehäuses (12) befestigtes Bodenverschlusselement (15), wobei der Anker (6) in einem Raum zwischen dem Bodenverschlusselement (15) und dem Kern (4) linear bewegbar ist.

4. Elektromagnetischer Antrieb (1) nach Anspruch 3,
**dadurch gekennzeichnet, dass**
der Raum mit einem Dämpfungsfluid gefüllt ist.

5. Elektromagnetischer Antrieb (1) nach einem der vorherigen Ansprüche, **dadurch gekennzeichnet, dass**
der Kern (4) einen entlang der Symmetrieachse verlaufenden Durchbruch (16) aufweist, in dem eine Ankerachse (17) lagerbar und/oder gelagert ist.

6. Elektromagnetischer Antrieb (1) nach Anspruch 5,
**gekennzeichnet durch**
ein auf einer Oberseite des Kerns (4) angeordnetes Zentrierdeckelelement (18).

7. Elektromagnetischer Antrieb (1) nach Anspruch 5 oder 6,
**gekennzeichnet durch**
einer an einem Ende im Anker (6) befestigten Ankerachse (17), wobei sich die Ankerachse (17) über eine Oberseite des Kerns (4) erstreckt und am anderen Ende ein kugelförmiges Lagerelement (19) aufweist.

8. Elektromagnetischer Antrieb (1) nach Anspruch 7,
**gekennzeichnet durch**
ein in dem Anker angeordnetes Hubeinstellungsmittel (26) zum Einstellen eines Hubbereichs der Ankerachse (17).

9. Elektromagnetischer Antrieb (1) nach einem der Ansprüche 5 bis 8,
**gekennzeichnet durch**
ein in dem Durchbruch (16) angeordnetes Achsengleitlager (20).

10. Elektromagnetischer Antrieb (1) nach einem der vorherigen Ansprüche, **dadurch gekennzeichnet, dass**
der Anker (6) parallel zur Symmetrieachse verlaufende Durchbrüche (21) aufweist, die jeweils mit einem Verschlussmittel (22), insbesondere einer Madenschraube, verschließbar sind.

11. Elektromagnetischer Antrieb (1) nach einem der vorherigen Ansprüche, **gekennzeichnet durch**
ein in der Basis (8) des Luftspalts (7) angeordnetes Abstandselement (23), insbesondere einer Abstandsscheibe, das einen minimalen Abstand zwischen Kern (4) und Anker (6) bestimmt.

12. Elektromagnetischer Antrieb (1) nach einem der vorherigen Ansprüche, **gekennzeichnet durch**
ein in einer Ankernut (24) angeordnetes Gleitlager (25), insbesondere einem Sinterlager, wobei die Ankernut (24) an einer Außenseite und an einem zum Kern (4) benachbarten Rand des Ankers (6) ausgebildet ist.

## Claims

1. An electromagnetic drive (1) for carrying out a linear motion comprising an electromagnet (2) having a coil (3), a core (4) and an armature (6) linearly movable along a symmetrical axis (5) of the core (4), wherein an air gap (7) is formed between the core (4) and the armature (6),
wherein the air gap (7) exhibits a base (8) and two limbs (9, 10) running symmetrically to the symmetrical axis (5) as well as a substantially longitudinally frustoconical cross section, and the limbs (9, 10) are arranged relative to the symmetrical axis (5) of the core (4) so as to form an angle (α),
**characterized in that**
the electromagnetic drive comprises a hollow cylindrical and magnetizable bar (11) arranged between the coil (3) and the core (4) which forms a part of a housing (12) in which the electromagnet (2) is disposed,
wherein the core (4) exhibits a measuring air gap (13) to an external side of the bar (11) and the electromagnetic drive a magnetic field sensor (14), in particular a Hall sensor, arranged in the measuring air gap (13) for measuring the magnetic flux density.

2. The electromagnetic drive (1) according to claim 1,
**characterized in that**
the core (4) extends over the bar (11) to an outer edge of the housing (12) and closes off an upper side of the housing (12) as a cover.

3. The electromagnetic drive (1) according to claim 1 or 2,
**characterized by**
a base closure element (15) affixed to a bottom side of the housing (12), wherein the armature (6) is linearly movable in a space between the base closure element (15) and the core (4).

4. The electromagnetic drive (1) according to claim 3,
**characterized in that**
the space is filled with a damping fluid.

5. The electromagnetic drive (1) according to one of the preceding claims,
**characterized in that**
the core (4) exhibits an opening (16) running along the symmetrical axis in which an armature shaft (17) is and/or can be seated.

6. The electromagnetic drive (1) according to claim 5,
**characterized by**
a centering cover element (18) arranged on an upper side of the core (4).

7. The electromagnetic drive (1) according to claim 5 or 6,
**characterized by**
an armature shaft (17) affixed to the armature (6) at one end, wherein the armature shaft (17) extends over an upper side of the core (4) and exhibits a spherical bearing element (19) at the other end.

8. The electromagnetic drive (1) according to claim 7,
**characterized by**
a lift adjustment means (26) arranged in the armature for setting a lifting range of the armature shaft (17).

9. The electromagnetic drive (1) according to one of claims 5 to 8,
**characterized by**
an axial slide bearing (20) arranged in the opening (16).

10. The electromagnetic drive (1) according to one of the preceding claims,
**characterized in that**
the armature (6) comprises openings (21) running parallel to the symmetrical axis which can each be closed by a closure means (22), in particular a set screw.

11. The electromagnetic drive (1) according to one of the preceding claims,
**characterized by**
a spacer element (23), in particular a spacer disk, arranged in the base (8) of the air gap (7) which determines a minimum distance between the core (4) and the armature (6).

12. The electromagnetic drive (1) according to one of the preceding claims,
**characterized by**
a slide bearing (25) arranged in an armature slot (24), in particular a sintered bearing, wherein the armature slot (24) is formed on an outer side and at an edge of the armature (6) adjacent the core (4).

## Revendications

1. Entraînement électromagnétique (1) pour exécuter un mouvement linéaire, comprenant un électroaimant (2) avec une bobine (3), un noyau (4) et un induit (6) mobile linéairement le long d'un axe de symétrie (5) du noyau (4), un entrefer (7) étant formé entre le noyau (4) et l'induit (6),
dans lequel l'entrefer (7) présente une base (8) et deux branches (9, 10) s'étendant symétriquement par rapport à l'axe de symétrie (5) ainsi qu'une section transversale sensiblement tronconique en coupe longitudinale, et les branches (9, 10) sont disposées selon un angle (α) par rapport à l'axe de symétrie (5) du noyau (4),
**caractérisé en ce que**
l'entraînement électromagnétique présente une tige (11) cylindrique creuse et magnétisable, qui est disposée entre la bobine (3) et le noyau (4) et qui fait partie d'un boîtier (12) dans lequel est disposé l'électroaimant (2),
le noyau (4) présentant un entrefer de mesure (13) par rapport à un côté extérieur de la tige (11) et l'entraînement électromagnétique présentant un capteur de champ magnétique (14), en particulier un capteur à effet Hall, disposé dans l'entrefer de mesure (13) pour mesurer la densité de flux magnétique.

2. Entraînement électromagnétique (1) selon la revendication 1,
**caractérisé en ce que**
le noyau (4) s'étend au-dessus de la tige (11) jusqu'au bord extérieur du boîtier (12) et ferme un côté supérieur du boîtier (12) comme un couvercle.

3. Entraînement électromagnétique (1) selon la revendication 1 ou 2,
**caractérisé par**
un élément de fermeture inférieur (15) fixé à un côté inférieur du boîtier (12), dans lequel l'induit (6) est mobile linéairement dans un espace entre l'élément de fermeture inférieur (15) et le noyau (4).

4. Entraînement électromagnétique (1) selon la revendication 3,
**caractérisé en ce que**
l'espace est rempli d'un fluide d'amortissement.

5. Entraînement électromagnétique (1) selon l'une des revendications précédentes,
**caractérisé en ce que**
le noyau (4) présente une ouverture (16) s'étendant le long de l'axe de symétrie, dans laquelle un axe d'induit (17) peut être monté et/ou est monté.

6. Entraînement électromagnétique (1) selon la revendication 5,
**caractérisé par**
un élément formant couvercle de centrage (18) disposé sur un côté supérieur du noyau (4).

7. Entraînement électromagnétique (1) selon la revendication 5 ou 6,
**caractérisé par**
un axe d'induit (17) fixé à une extrémité dans l'induit (6), l'axe d'induit (17) s'étendant au-dessus d'un côté supérieur du noyau (4) et présentant un élément formant palier sphérique (19) à l'autre extrémité.

8. Entraînement électromagnétique (1) selon la revendication 7,
**caractérisé par**
un moyen de réglage de course (26) disposé dans l'induit pour régler une plage de course de l'axe d'induit (17).

9. Entraînement électromagnétique (1) selon l'une des revendications 5 à 8,
**caractérisé par**
un palier lisse d'axe (20) disposé dans l'ouverture (16).

10. Entraînement électromagnétique (1) selon l'une des revendications précédentes,
**caractérisé en ce que**
l'induit (6) présente des ouvertures (21) qui s'étendent parallèlement à l'axe de symétrie et qui peuvent être fermées chacune par un moyen de fermeture (22), en particulier une vis sans tête.

11. Entraînement électromagnétique (1) selon l'une des revendications précédentes,
**caractérisé par**
un élément d'écartement (23), en particulier une rondelle d'écartement, disposé dans la base (8) de l'entrefer (7), qui détermine un écartement minimal entre le noyau (4) et l'induit (6).

12. Entraînement électromagnétique (1) selon l'une des revendications précédentes,
**caractérisé par**
un palier lisse (25), en particulier un palier fritté, disposé dans une rainure d'induit (24), la rainure d'induit (24) étant formée sur un côté extérieur et sur un bord de l'induit (6) adjacent au noyau (4).
